# EUROPÄISCHE PATENTSCHRIFT

(11) **EP 0 607 364 B1**
(45) Veröffentlichungstag und Bekanntmachung des Hinweises auf die Patenterteilung: **22.05.1996**
(21) Anmeldenummer: 93906359.0
(22) Anmeldetag: 30.09.1992
(51) Int. Cl.: C08F 220/12, C08F 246/00, C08F 220/60, C09D 157/06

(54) **AMINOGRUPPEN, CARBOXYLGRUPPEN UND GGF. HYDROXYLGRUPPEN ENTHALTENDES ACRYLATCOPOLYMERISAT, VERFAHREN ZU SEINER HERSTELLUNG SOWIE DESSEN VERWENDUNG**
ACRYLATE COPOLYMERISATE CONTAINING AMINO, CARBOXYL AND POSSIBLY HYDROXYL GROUPS, PROCESS FOR PRODUCING IT AND ITS USE
COPOLYMERISAT D'ACRYLATE RENFERMANT DES GROUPES AMINO, CARBOXYLE, ET EVENTUELLEMENT HYDROXYLE, SON PROCEDE DE FABRICATION ET SON UTILISATION

(30) Priorität: 09.10.1991 DE 4133420
(43) Veröffentlichungstag der Anmeldung: 27.07.1994
(73) Patentinhaber: BASF Lacke + Farben AG, D-48165 Münster-Hiltrup (DE)
(72) Erfinder: HOFFMANN, Peter, D-4403 Senden (DE); BRÜNNEMANN, Michael, D-4400 Münster (DE)
(86) Internationale Anmeldenummer: EP9202259
(87) Internationale Veröffentlichungsnummer: WO9307190

(56) Entgegenhaltungen:
- DE-A- 2 817 369
- FR-A- 2 241 600
- CHEMICAL ABSTRACTS, vol. 93, no. 14, 6. Oktober 1980, Columbus, Ohio, US; abstract no. 133093; "ACRYLATE-BASED COPOLYMERS"

## Beschreibung

Die vorliegende Erfindung betrifft ein Aminogruppen, Carboxylgruppen und ggf. Hydroxylgruppen enthaltendes Acrylatcopolymerisat, das erhältlich ist durch Copolymerisation in einem organischen Lösemittel bei Temperaturen zwischen 80 und 150°C unter Verwendung von Polymerisationsinitiatoren und unter Verwendung mindestens eines ethylenisch ungesättigten Monomeren mit einer tertiären Aminogruppe.

Gegenstand der vorliegenden Erfindung ist ferner ein Verfahren zur Herstellung dieser Acrylatcopolymerisate sowie ihre Verwendung.

Acrylatcopolymerisate, die Aminogruppen und Carboxylgruppen enthalten, sind bekannt und werden beispielsweise als Bindemittel in Beschichtungsmitteln eingesetzt, die als Härter Epoxidharze enthalten. Die im Bindemittel enthaltenen Aminogruppen katalysieren dabei die bei der Aushärtung dieser Beschichtungsmittel auftretene Carboxy-Epoxy-Reaktion.

So sind beispielsweise aus der WO 87/02041 derartige Beschichtungsmittel auf der Basis von Polyepoxiden und von verzweigten carboxyl- und aminogruppenhaltigen Acrylatharzen bekannt, wobei die Aminogruppen dadurch in das Acrylatharz eingeführt werden, daß das Acrylatharz unter Verwendung von ethylenisch ungesättigten Monomeren mit einer tertiären Aminogruppe hergestellt wird oder daß das Acrylatharz mit Verbindungen umgesetzt wird, die neben mindestens einer tertiären Aminogruppe eine mit den funktionellen Gruppen des Acrylatharzes reaktive Gruppe aufweisen.
Diese Beschichtungsmittel härten bei Raumtemperatur oder etwas erhöhter Temperatur aus und führen zu Beschichtungen mit guten technischen Eigenschaften, jedoch ist die hohe Farbzahl der Beschichtungsmittel, die Acrylatharze auf der Basis der aminogruppenhaltigen Monomeren enthalten, bei der Verwendung der Beschichtungsmittel insbesondere als Klarlack nachteilig.

Ferner ist aus der JP-OS 21 92 67/83 ein Beschichtungsmittel bekannt, das neben einer Polyepoxidkomponente und einer durch Doppelbindungen und/oder Hydroxylgruppen aktivierten Carbonsäure ein Acrylatcopolymerisat enthält, das durch Copolymerisation von Acrylmonomeren mit einer tertiären Aminogruppe, Acryl- oder Methacrylsäureestern und ggf. weiteren Monomeren hergestellt worden ist. Diese Beschichtungsmittel härten bei Raumtemperatur oder etwas erhöhter Temperatur durch eine Reaktion der Epoxidgruppen mit den Aminogruppen aus und führen zu Beschichtungen mit guten technischen Eigenschaften. Trotz Verwendung aminogruppenhaltiger Monomerer bei der Herstellung der Acrylatcopolymerisate tritt auch nach längerer Lagerung keine Braunfärbung der Acrylatlösung auf, was durch den Zusatz der aktivierten Carbonsäure erreicht wird. Nachteilig bei diesen aus der JP-OS 21 92 67/83 bekannten Beschichtungsmitteln ist jedoch, daß der Zusatz der aktivierten Carbonsäure eine Verschlechterung der Witterungsstabilität der resultierenden Beschichtungen zur Folge hat.

Aus der JP-PS 59-36666 ist ein Beschichtungsmittel bekannt, das erhältlich ist durch Mischen von Acrylatcopolymerisaten aus Acrylsäureestern, carboxylgruppenhaltigen Monomeren und Acrylmonomeren, die ein tertiäres Stickstoffatom enthalten, wie beispielsweise Diethylaminoethylacrylat, mit Polyepoxiden. Diese Beschichtungsmittel können bei niedrigen Temperaturen ausgehärtet werden und haben einen hohen Festkörpergehalt. Nachteilig bei diesen Systemen ist die hohe Farbzahl der Copolymerisate sowie die Vergilbung der Lacke unter UV-Belastung, beispielsweise im QUV-Test.

Weiterhin sind auch aus der JP-OS 114 838/78 Beschichtungsmittel auf der Basis eines Acrylatcopolymerisats bekannt, das erhältlich ist durch Copolymerisation von 0,2 bis 10 Gew.-% Acrylmonomeren, die ein tertiäres Stickstoffatom enthalten, 35 bis 99,7 Gew.-% Alkyl(meth)acrylat-Monomeren und 0,1 bis 20 Gew.-% hydroxylgruppenhaltigen Monomeren. Die Verwendung von Vinylimidazol oder Dimethylaminopropylmethacrylamid als Aminmonomer ist in der JP-OS 53-114838 nicht beschrieben. Ferner härten diese Beschichtungsmittel nicht über eine Carboxi-Epoxi-Reaktion, sondern über eine Epoxi-Amin-Reaktion aus. Nachteilig bei diesen Systemen ist die geringe Vernetzungsdichte.

Ferner sind aus der DE-OS 33 22 830 bei niedrigen Temperaturen aushärtende Beschichtungsmittel bekannt, die als Bindemittel ein hydroxylgruppenhaltiges Acrylatcopolymerisat und ein Polyesterpolyol sowie als Vernetzer teilweise oder vollständig blockierte, Isocyanurat- und ggf. Biuretgruppen aufweisende Polyisocyanate enthalten. Die hydroxylgruppenhaltigen Acrylatcopolymerisate werden hergestellt unter Mitverwendung von 0 bis 10 Gew.-% eines Amids der Acryl- und Methacrylsäure sowie 1 bis 25 Gew.-% einer ethylenisch ungesättigten, heterocyclischen, basischen Verbindung, wie beispielsweise Vinylimidazol.

Aus der FR-A-2 241 600 sind amino- und carboxylgruppenhaltige Copolymerisate für die Verwendung in Klebstoffen bekannt, die unter Verwendung von Estern der Methacrylsäure mit Aminoalkoholen als Monomerkomponente hergestellt worden sind.

Aus der DE-A-28 17 369 sind Copolymerisate bekannt, die unter Verwendung von 2-(N,N-Dimethylamino)ethylmethacrylat und Methacrylamiden, die am Stickstoff durch einen Alkylrest substituiert sind, als Monomerkomponente hergestellt worden sind.

Aus der AT-B-357 762 sind Copolymerisate bekannt, die unter Verwendung von Estern der Methacrylsäure mit Aminoalkoholen und/oder Morpholinoalkylmethacrylaten als Monomerkomponente hergestellt worden sind.

Weder in der FR-A-22 41 600 noch der DE-A-28 17 369, noch der AT-B-357 762 ist die Verwendung von Vinylimidazol und/oder Dimethylaminopropylmethacrylamid als Monomerkomponente beschrieben.

Der vorliegenden Erfindung lag somit die Aufgabe zugrunde, ein Aminogruppen, Carboxylgruppen und ggf. Hydroxylgruppen enthaltendes Acrylatcopolymerisat zur Verfügung zu stellen, das eine möglichst geringe Farbzahl aufweist und für den Einsatz in Beschichtungsmitteln geeignet ist, die bei Raumtemperatur oder bei leicht erhöhter Temperatur aushärten und damit beispielsweise in der Autoreparaturlackierung eingesetzt werden können. Insbesondere sollten Amino- und Carboxylgruppen enthaltende Acrylatcopolymerisate zur Verfügung gestellt werden, die nach Vermischen mit Polyepoxiden und ggf. weiteren carboxylgruppenhaltigen Polymeren zu Beschichtungsmitteln führen, die eine geringe Eigenfärbung sowie eine geringe Vergilbung im QUV-Test aufweisen.

Diese Aufgabe wird überraschenderweise durch ein Acrylatcopolymerisat der eingangs genannten Art gelöst, das dadurch gekennzeichnet ist, daß es hergestellt worden ist, indem
A) mittels radikalischer Lösungspolymerisation unter Verwendung von Azoinitiatoren bei Temperaturen von 80 bis 150°C aus
   a₁) 1 bis 20 Gew.-% Vinylimidazol und/oder Dimethylaminopropylmethacrylamid,
   a₂) 0 bis 50 Gew.-% eines oder mehrerer hydroxylgruppenhaltiger Monomerer,
   a₃) 0 bis 50 Gew.-% eines oder mehrerer carboxylgruppenhaltiger Monomerer und
   a₄) 30 bis 85 Gew.-% mindestens eines weiteren ethylenisch ungesättigten, copolymerisierbaren Monomers,
   wobei die Summe der Gewichtsanteile der Komponenten a₁ bis a₄ jeweils 100 Gew.-% beträgt und wobei die Gewichtsanteile der Komponenten a₂ und a₃ nicht beide gleichzeitig Null sind, ein aminogruppen- und ggf. carboxylgruppenhaltiges Acrylatcopolymerisat hergestellt worden ist und
B) ggf. das in der Stufe (A) erhaltene hydroxylgruppenhaltige Acrylatcopolymerisat mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

Gegenstand der vorliegenden Erfindung ist außerdem ein Verfahren zur Herstellung dieser Acrylatcopolymerisate. Ferner betrifft die Erfindung auch Beschichtungsmittel, die diese Acrylatcopolymerisate enthalten, und die Verwendung dieser Beschichtungsmittel.

Es ist überraschend und war angesichts der Vielzahl bekannter Monomerer, die ein tertiäres Stickstoffatom enthalten, nicht vorhersehbar, daß gerade bei Verwendung von Vinylimidazol und/oder Dimethylaminopropylmethacrylamid als ethylenisch ungesättigtes Monomer mit einer tertiären Aminogruppe und unter gleichzeitiger Verwendung von Azoinitiatoren als Polymerisationsinitiatoren Acrylatcopolymerisate mit einer deutlich reduzierten Farbzahl erhalten werden. Vorteilhaft ist ferner, daß die daraus formulierten Lacke nur eine sehr geringe Vergilbung im QUV-Test aufweisen. Ferner zeichnen sich die erfindungsgemäßen Beschichtungsmittel durch eine schnelle Aushärtung bei gleichzeitig guter Topfzeit aus.

Im folgenden soll nun zunächst das erfindungsgemäße Acrylatcopolymerisat näher erläutert werden. Die Herstellung der Acrylatcopolymerisate kann dabei auf verschiedenen Wegen erfolgen. So kann durch Copolymerisation von Vinylimidazol und/oder Dimethylaminopropylmethacrylamid, hydroxylgruppenhaltigen Monomeren, ggf. carboxylgruppenhaltigen Monomeren sowie weiteren ethylenisch ungesättigten Monomeren ein amino- und hydroxyl- sowie ggf. carboxylgruppenhaltiges Acrylatcopolymerisat hergestellt werden. Dieses Acrylatcopolymerisat kann direkt in Beschichtungsmitteln eingesetzt werden, die als Härter Polyisocyanate enthalten. Das erhaltene amino- und hydroxylgruppenhaltige Acrylatcopolymerisat wird aber bevorzugt in einer weiteren Stufe mit Carbonsäureanhydriden zu einem amino- und carboxyl-, ggf. auch hydroxylgruppenhaltigen Acrylatcopolymerisat umgesetzt, welches dann in Beschichtungsmitteln eingesetzt werden kann, die als Härter Polyepoxide enthalten. Schließlich kann auch durch Copolymerisation von Vinylimidazol und/oder Dimethylaminopropylmethacrylamid, carboxylgruppenhaltigen Monomeren, ggf. hydroxylgruppenhaltigen Monomeren sowie weiteren ethylenisch ungesättigten Monomeren direkt ein amino- und carboxyl- sowie ggf. hydroxylgruppenhaltiges Acrylatcopolymerisat hergestellt werden, welches in Beschichtungsmitteln eingesetzt werden kann, die als Härter Polyepoxide enthalten.

Acrylatcopolymerisate, die neben Aminogruppen auch Carboxylgruppen sowie ggf. Hydroxylgruppen enthalten, sind bevorzugt erhältlich, indem
A) mittels radikalischer Lösungspolymerisation unter Verwendung von Azoinitiatoren bei Temperaturen von 80 bis 150°C, bevorzugt zwischen 90 und 120°C, aus
   a₁) 1 bis 20 Gew.-% Vinylimidazol und/oder Dimethylaminopropylmethacrylamid,
   a₂) 0 bis 50 Gew.-% eines oder mehrerer hydroxylgruppenhaltiger Monomerer,
   a₃) 0 bis 50 Gew.-% eines oder mehrerer carboxylgruppenhaltiger Monomerer und
   a₄) 30 bis 85 Gew.-% mindestens eines weiteren ethylenisch ungesättigten, copolymerisierbaren Monomers,
   ein Acrylatcopolymerisat hergestellt worden ist, wobei die Summe der Gewichtsanteile der Komponenten a₁ bis a₄ jeweils 100 Gew.-% beträgt und wobei die Gewichtsanteile der Komponenten a₂ und a₃ nicht beide gleichzeitig Null sind, und
B) ggf. das in der Stufe (A) erhaltene Acrylatcopolymerisat mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

Besonders bevorzugt sind die Acrylatcopolymerisate erhältlich, indem zunächst aus
a₁) 5 bis 15 Gew.-% Vinylimidazol und/oder Dimethylaminopropylmethacrylamid,
a₂) 20 bis 40 Gew.-% eines oder mehrerer hydroxylgruppenhaltiger Monomerer,
a₃) 0 bis 10 Gew.-% eines oder mehrerer carboxylgruppenhaltiger Monomerer und
a₄) 40 bis 60 Gew.-% mindestens eines weiteren ethylenisch ungesättigten, copolymerisierbaren Monomers,
wobei die Summe der Gewichtsanteile der Komponenten a₁ bis a₄ jeweils 100 Gew.-% beträgt, ein hydroxylgruppenhaltiges Acrylatcopolymerisat hergestellt worden ist und dieses dann in einer zweiten Stufe mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

Bevorzugt sind ferner auch Acrylatcopolymerisate, die erhältlich sind, indem zunächst aus
a1) 5 bis 15 Gew.-% Vinylimidazol und/oder Dimethylaminopropylmethacrylamid,
a2) 0 bis 20 Gew.-% eines oder mehrerer hydroxylgruppenhaltiger Monomerer,
a3) 20 bis 50 Gew.-% eines oder mehrerer carboxylgruppenhaltiger Monomerer und
a4) 40 bis 60 Gew.-% mindestens eines weiteren ethylenisch ungesättigten, copolymerisierbaren Monomers,
wobei die Summe der Gewichtsanteile der Komponenten a₁ bis a₄ jeweils 100 Gew.-% beträgt,

ein carboxyl-, amino- und ggf. hydroxylgruppenhaltiges Acrylatcopolymerisat hergestellt worden ist und dieses Copolymerisat ggf. in einer zweiten Stufe mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

Als Komponente a₂ können Hydroxialkylester α,β-ungesättigter Carbonsäuren mit primären oder sekundären Hydroxylgruppen eingesetzt werden. Vorwiegend werden Hydroxialkylester mit primären Hydroxylgruppen eingesetzt, da sie in der polymeranalogen Reaktion mit dem Carbonsäureanhydrid eine höhere Reaktivität aufweisen. Selbstverständlich können auch Mischungen von Hydroxialkylestern mit primären Hydroxylgruppen und Hydroxialkylester mit sekundären Hydroxylgruppen verwendet werden, beispielsweise wenn man Hydroxylgruppen im carboxylgruppenhaltigen Copolymer benötigt, z.B. für die Einstellung der Verträglichkeit des carboxylgruppenhaltigen Copolymers mit den eingesetzten polaren Epoxidharzen, wie z. B. das Handelsprodukt Santolink LSE 120 oder LSE 114 der Firma Monsanto.
Beispiele für geeignete Hydroxialkylester α,β-ungesättigter Carbonsäuren mit primären Hydroxylgruppen sind Hydroxiethylacrylat, 3-Hydroxipropylacrylat, 4-Hydroxibutylacrylat und die entsprechenden Methacrylate. Als Beispiele für verwendbare Hydroxialkylester mit einer sekundären Hydroxylgruppe seien 2-Hydroxipropylacrylat, 2-Hydroxibutylacrylat, 3-Hydroxibutylacrylat und die entsprechenden Methacrylate genannt.

Selbstverständlich können jeweils auch die entsprechenden Ester anderer, α,β-ungesättigter Carbonsäuren, wie z.B. der Crotonsäure und der Isocrotonsäure eingesetzt werden.

Vorteilhafterweise kann die Komponente a₂ zumindest teilweise ein Umsetzungsprodukt aus einem Mol Hydroxiethylacrylat und/oder Hydroxiethylmethacrylat und durchschnittlich zwei Mol ε-Caprolacton sein. Als Komponente a2 kann zumindest teilweise auch ein Umsetzungsprodukt von hydroxylgruppenhaltigen Monomeren mit Ethylenoxid und/oder Propylenoxid eingesetzt werden. Die Zahl der Ethergruppen des Umsetzungsproduktes liegt im allgemeinen bei weniger als 15, bevorzugt weniger als 10.

Beispiele für geeignete carboxylgruppenhaltige Monomere a₃ sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie ε-Carboxiethylacrylat und Addukte von Hydroxialkylestern der Acrylsäure und/oder Methacrylsäure mit Carbonsäureanhydriden, wie z.B. Phthalsäure-mono-2-methacryloyloxiethylester, Hexahydrophthalsäure-mono-2-methacryloyloxiethylester, Hexahydrophthalsäure-mono-4-acryloyloxibutylester sowie caprolactonmodifizierte Acrylatmonomere mit COOH-Gruppen, wie z.B. das Handelsprodukt TONE XM 300 der Firma Union Carbide/USA, ein Polyesteracrylat auf Basis Caprolacton mit einem Molgewicht von ca. 500 mit einer polymerisierbaren Doppelbindung und einer Carboxylgruppe. Ferner sind als Komponenten a₃ auch die in der EP-B1-230330 auf Seite 2, Zeile 29 bis Seite 4, Zeile 8 beschriebenen langkettigen, Carboxylendgruppen aufweisenden Monomeren geeignet.
Diese langkettigen carboxylgruppenhaltigen Monomeren sind beispielsweise herstellbar, indem zunächst hydroxylgruppenhaltige Monomere mit Ethylenoxid und/oder Propylenoxid umgesetzt werden und die resultierenden Produkte dann mit einem Säureanhydrid zu dem carboxylgruppenhaltigen Monomer umgesetzt werden.
Zum Aufbau des Acrylatcopolymerisats werden außerdem noch weitere, ethylenisch ungesättigte, copolymerisierbare Monomere a₄ eingesetzt. Bei der Auswahl dieser Monomeren ist darauf zu achten, daß der Einbau dieser Monomeren a₄ nicht zu unerwünschten Eigenschaften des Copolymerisats führt. So richtet sich die Auswahl der Komponente a₄ weitgehend nach den gewünschten Eigenschaften der härtbaren Zusammensetzung in bezug auf Elastizität, Härte, Verträglichkeit und Polarität.

Beispielsweise können als Komponente a₄ Alkylester von ethylenisch ungesättigten Carbonsäuren eingesetzt werden.

Beispiele hierfür sind Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure.

Diese Alkylester von ethylenisch ungesättigten Carbonsäuren werden üblicherweise in einer Menge von 5 bis 50 Gew.-%, bevorzugt von 15 bis 35 Gew.-%, jeweils bezogen auf das Gesamtgewicht der eingesetzten Monomeren, eingesetzt.

Ferner sind als Komponenten a₄ auch vinylaromatische Verbindungen geeignet, beispielsweise Styrol, Vinyltoluole, α-Methylstyrol, Chlorstyrole, o-,m- oder p-Methylstyrol, 2,5-Dimethylstyrol, p-Methoxistyrol, p-tert.-Butylstyrol, p-Vinylphenol u.ä. Bevorzugt werden Vinyltoluole sowie insbesondere Styrol eingesetzt. Diese vinylaromatischen Verbindungen werden üblicherweise in einer Menge von 0 bis 30 Gew.-%, bevorzugt von 5 bis 15 Gew.-%, jeweils bezogen auf das Gesamtgewicht der eingesetzten Monomeren, eingesetzt.

Als Komponente a₄ können auch Monomere mit mindestens zwei polymerisierbaren, ethylenisch ungesättigten Doppelbindungen eingesetzt werden, insbesondere um die Reaktivität und Vernetzungsdichte der Lackfilme zu erhöhen.

Vorteilhafterweise werden als Monomer mit mindestens zwei polymerisierbaren Doppelbindungen Dimethacrylate von Diolen mit 2 bis 12 C-Atomen eingesetzt, beispielsweise Glykoldimethacrylat, Propandioldimethacrylat, Butandioldimethacrylat, Pentandioldimethacrylat, Hexandioldimethacrylat, Heptandioldimethacrylat, Methylhexandioldimethacrylat u.ä. Bevorzugt werden außerdem Reaktionsprodukte von Hydroxiethylmethacrylat und Ethylen- oder Propylenoxid oder den daraus entstehenden Dimeren eingesetzt. Die Verwendung dieser genannten, bevorzugt eingesetzten Verzweigungsmonomere bringt im Vergleich zu anderen Verzweigungsmonomeren - wie sie beispielsweise in der EP-A-158 161 beschrieben sind - den Vorteil einer besseren Farbzahl sowie den Vorteil einer Reduzierung der erforderlichen Reglermenge. Die Verwendung von Verzweigungsmonomeren auf der Basis von Diacrylaten kann aufgrund von Nebenreaktionen (Michael Addition der Mercaptogruppe des Reglers mit den Doppelbindungen des Verzweigungsmonomers, katalysiert durch die tertiären Aminogruppen des Vinylimidazols/Dimethylaminopropylmethacrylamids) zu Gelierungen führen. Die Verwendung von Divinylbenzol und seinen Derivaten führt zu einer zu starken Farbzahl der Harze sowie zu einer Sprödigkeit der resultierenden Filme.

Selbstverständlich können auch Kombinationen der mehrfach ungesättigten Monomeren eingesetzt werden. Falls als Komponente a₄ Monomere mit mindestens zwei polymerisierbaren, ethylenisch ungesättigten Doppelbindungen eingesetzt werden, so werden diese Verbindungen üblicherweise in einer Menge von mehr als 3 bis 30 Gew.-%, bevorzugt 5 bis 25 Gew.-%, jeweils bezogen auf das Gesamtgewicht der eingesetzten Monomeren, eingesetzt.

Als Komponente a₄ können auch Polysiloxanmakromonomere mit einem zahlenmittleren Molekulargewicht von 1.000 bis 40.000, bevorzugt 2.000 bis 10.000, und im Mittel 0,5 bis 3,0 ethylenisch ungesättigten Doppelbindungen pro Molekül eingesetzt werden. Der Einsatz dieser Polysiloxanmakromonomere führt zu gut überlackierbaren Beschichtungen mit einer guten Witterungsbeständigkeit, einer guten Lösemittel- und Chemikalienbeständigkeit sowie einem guten Decklackstand und ausreichender Kratzfestigkeit.

Als Komponente a₄ geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 beschriebenen Polysiloxanmakromonomere.
Ferner sind auch andere Acryloxisilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxifunktioneller Silane mit Epichlorhydrin und anschließender Umsetzung des Reaktionsprodukts mit (Meth)Acrylsäure und/oder Hydroxialkylestern der (Meth)Acrylsäure.

Bevorzugt werden als Komponente a₁ Polysiloxanmakromonomere der folgenden Formel eingesetzt: 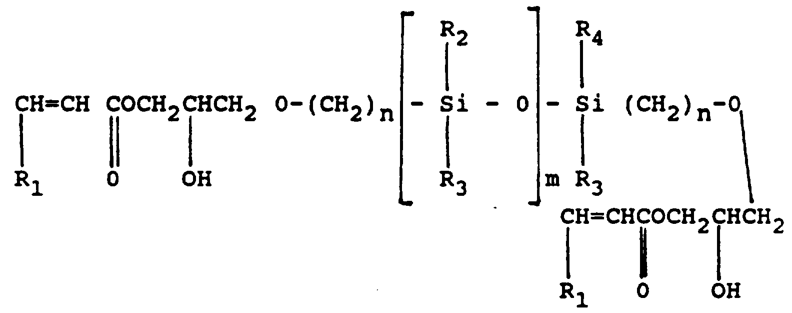 mit
- R₁ =: H oder CH₃
- R₂, R₃, R₄, R₅, =: gleiche oder verschiedene aliphatische Kohlenwasserstoffreste mit 1 bis 8 C-Atomen, insbesondere Methyl- oder Phenylrest
- n = 2: bis 5, bevorzugt 3
- m = 8: bis 30

Besonders bevorzugt wird das α,ω-acryloxiorganofunktionelle Polydimethylsiloxan der Formel 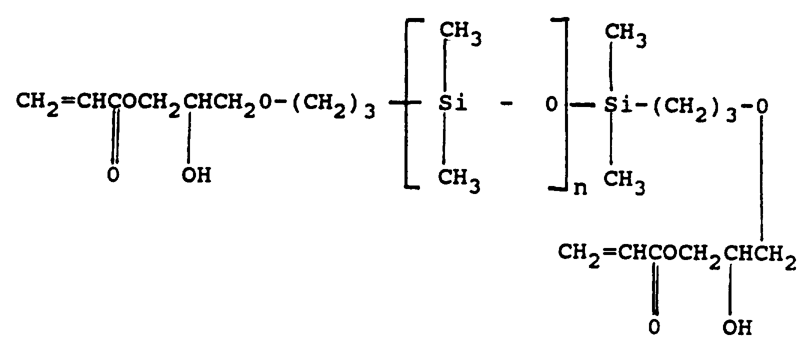 mit n ∼ 9, einem Acryloxiäquivalent von 550 g/Äquivalent, einer OH-Zahl von 102 mg KOH/g und einer Viskosität von 240 mPas (25°C) eingesetzt.

Falls als Komponente a₄ Polysiloxanmakromonomere eingesetzt werden, so liegt ihre Einsatzmenge üblicherweise bei weniger als 5 Gew.-%, bevorzugt zwischen 0,05 und 2,5 Gew.-% und besonders bevorzugt bei weniger als 1 Gew.-%, jeweils bezogen auf das Gesamtgewicht der eingesetzten Monomeren. Als Komponente a₄ können selbstverständlich auch Mischungen der genannten Monomeren eingesetzt werden.

Die Herstellung der erfindungsgemäßen Copolymerisate erfolgt mittels Lösungspolymerisation in einem organischen Lösemittel oder Lösemittelgemisch bei Temperaturen zwischen 80 und 150°C, bevorzugt zwischen 90 und 120°C. Die Polymerisation wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie einem Rückflußkühler, in dem flüchtige Bestandteile zurückgehalten werden, ausgerüstet. Es ist erfindungsgewesentlich, daß die Polymerisation in Gegenwart von Azoinitiatoren, wie beispielsweise Azobiscarbonsäureamiden und Azobiscarbonsäurenitrilen, durchgeführt wird. Beispiele für geeignete Azoinitiatoren sind Azobisisovaleronitril, Azobis-(2,4-dimethylvaleronitril), Azoisobutylvaleronitril, Azobisisobutyronitril und Azobiscyclohexannitril. Geeignet sind auch Derivate der Azoinitiatoren mit weiteren funktionellen Gruppen, z. B. Hydroxyl- oder Carboxylgruppen. Ferner können auch Mischungen der genannten Initiatoren eingesetzt werden. Bevorzugt wird Azobisisovaleronitril eingesetzt.

Die Initiatormenge beträgt in den meisten Fällen 0,1 bis 5 Gew.-%, bezogen auf die zu verarbeitende Monomerenmenge, sie kann ggf. aber auch höher liegen. üblicherweise wird der Initiator, gelöst in einem Teil des für die Polymerisation eingesetzten Lösungsmittels, allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Werden Initiatoren mit nur einer geringen Zerfallrate, d.h. lange Halbwertszeit unter den vorliegenden Reaktionsbedingungen eingesetzt, so ist es auch möglich, den Initiator vorzulegen. Ferner kann der Initiator auch teilweise vorgelegt werden.

Bevorzugt wird die Reaktion in Gegenwart von Polymerisationsreglern durchgeführt, insbesondere wenn als Komponente a₄ mehr als 5 Gew.-% difunktionelle Monomere eingesetzt werden, um die Dispersität der resultierenden Copolymeren einzuschränken und damit die Viskosität der Harze zu reduzieren. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure.

Diese Regler werden in einer Menge von bis zu 2 Gew.-%, bezogen auf die zu verarbeitende Monomerenmenge, eingesetzt. Vorzugsweise werden sie in einem der Monomerenzuläufe gelöst und mit den Monomeren zugegeben, soweit ausgeschlossen werden kann, daß Nebenreaktionen stattfinden. Bevorzugt ist die zugegebene Reglermenge zeitlich konstant.

Die Polymerisation wird in einem organischen, gegenüber den eingesetzten Monomeren und ggf. gegenüber Carbonsäureanhydriden inerten, Lösemittel durchgeführt. Bevorzugt liegt der Polymerisationsfestkörper bei mindestens 30 Gew.-%, besonders bevorzugt zwischen 45 und 60 Gew.-%, bezogen auf das Gesamtgewicht der Reaktionsmischung. Beispiele für geeignete Lösemittel sind handelsübliche alkylierte aromatische Kohlenwasserstoffe bzw. Gemische mit einem Siedebereich von 130 bis 220°C, Toluol, Xylol und andere aromatische Kohlenwasserstoffe, Ester, wie z.B. Butylacetat, l-Methoxipropylacetat-2, Butylglykolacetat, Ethylethoxipropionat u.ä. sowie aliphatische Kohlenwasserstoffe u.ä. Findet nach der Polymerisation keine Addition von Anhydriden statt, so können auch höhersiedende Alkohole und/oder Esteralkohole, wie z. B. sek.-Butanol und 1-Methoxipropanol, eingesetzt werden.
Die Komponenten a₁ und/oder a₂ und/oder a₃ und/oder a₄ können auch zumindest teilweise zusammen mit einem Teil der insgesamt einzusetzenden Lösemittelmenge vorgelegt und auf die jeweilige Reaktionstemperatur aufgeheizt werden. Die restliche Menge des Lösemittels wird - wie bereits beschrieben - vorzugsweise zusammen mit dem Katalysator allmählich zugefügt. Die ggf. noch vorhandene restliche Menge der Monomeren wird zudosiert.

Die zur Härtung der Beschichtungsmittel erforderlichen Carboxylgruppen können zumindest teilweise dadurch in das Copolymerisat eingeführt werden, daß das in der Stufe A erhaltene hydroxyl- und aminogruppenhaltige Acrylatcopolymerisat mit Carbonsäureanhydriden umgesetzt wird.

Die für die Reaktion mit den Carbonsäureanhydriden eingesetzten Copolymerisate weisen dabei üblicherweise eine OH-Zahl von 40 bis 250 mg KOH/g, bevorzugt von 80 bis 140 mg KOH/g, auf.

Für die Addition an die hydroxylgruppenhaltigen Copolymeren geeignete Carbonsäureanhydride sind die Anhydride von aliphatischen, cycloaliphatischen und aromatischen gesättigten und/oder ungesättigten Di- und Polycarbonsäuren wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierte oder alkylierte Derivate.

Bevorzugt eingesetzt werden Anhydride der Phthalsäure, Tetrahydro- und Hexahydrophthalsäure sowie Methylhexahydrophthalsäureanhydrid.

Die Umsetzung der hydroxylgruppenhaltigen Copolymerisate mit den Carbonsäureanhydriden erfolgt üblicherweise bei Temperaturen zwischen 40 und 100 °C, bevorzugt zwischen 50 bis 70 °C.

Bevorzugte Acrylatcopolymerisate werden erhalten, indem das in der Stufe A erhaltene Acrylatcopolymerisat bei Temperaturen von ≤ 60 °C mit Hexahydrophthalsäureanhydrid und/oder Derivaten des Hexahydrophthalsäureanhydrids umgesetzt wird.

Die für den Einsatz in Beschichtungsmitteln, die durch Zusatz von Polyepoxiden gehärtet werden, geeigneten amino- und carboxylgruppenhaltigen Acrylatcopolymerisate weisen bevorzugt eine Säurezahl von 20 bis 150 mg KOH/g, besonders bevorzugt 30 bis 90 mg KOH/g, und eine Aminzahl von 5 bis 60 mg KOH/g, besonders bevorzugt von 10 bis 40 mg KOH/g, auf. Bevorzugt weist dieses Acrylatcopolymerisat außerdem eine OH-Zahl von größer als 20 mg KOH/g auf, da in diesem Fall eine besonders gute Verträglichkeit mit den als Vernetzungsmitteln eingesetzten polaren Polyepoxiden gegeben ist.

Außerdem weisen diese amino- und carboxyl- sowie ggf. hydroxylgruppenhaltigen Acrylatcopolymerisate bevorzugt zahlenmittlere Molekulargewichte von 1000 bis 5000, besonders bevorzugt von 1500 bis 3500 auf.

Neben diesen erfindungsgemäßen amino- und carboxylgruppenhaltigen Acrylatcopolymerisaten können die Beschichtungsmittel als Bindemittel ggf. noch ein carboxylgruppenhaltiges Kondensationsharz enthalten. Bevorzugt werden Kondensationsharze mit einer Säurezahl von 10 bis 160 mg KOH/g, besonders bevorzugt 20 bis 120 mg KOH/g, und einer Aminzahl von 3 bis 90 mg KOH/g, besonders bevorzugt 10 bis 60 mg KOH/g, eingesetzt. Bevorzugt werden Kondensationsharze mit einem zahlenmittleren Molekulargewicht von 500 bis 3000, besonders bevorzugt von 1000 bis 2500 eingesetzt. Das Mischungsverhältnis liegt in diesem Fall üblicherweise zwischen 40 und 90 Gew.-% Acrylatcopolymerisat sowie zwischen 10 und 60 Gew.-% Kondensationsharz. Bevorzugt liegt das Mischungsverhältnis bei 70 bis 50 Gew.-% Acrylatcopolymerisat und 30 bis 50 Gew.-% Kondensationsharz.
Beispiele für geeignete Kondensationsharze sind carboxylgruppenhaltige Polyester und/oder Alkydharze. Beispielsweise sind die in der WO 88/01629 auf Seite 3, Zeile 15 bis Seite 12, Zeile 20 beschriebenen Polyesterharze geeignet, wobei bei der Auswahl der dort beschriebenen Aufbaukomponenten darauf zu achten ist, daß sie keinen negativen Einfluß auf die Farbzahl der Beschichtungsmittel haben.

Für die Herstellung von Polyestern mit möglichst niedriger Farbzahl ist die Verwendung von aliphatischen und cycloaliphatischen Polycarbonsäuren bzw. von deren Anhydriden, die nicht nach dem Oxo-Prozeß hergestellt werden, bevorzugt. Besonders bevorzugt ist die Verwendung von Cyclohexandicarbonsäure, da sie zu farblosen Polymeren führt, die außerdem zugleich zu einer guten Trocknung und Härteentwicklung im Lackfilm führen. Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle. Zur Flexibilisierung dieser Kondensationsharze können als Polycarbonsäure auch Dimerfettsäuren, wie z. B. die Handelsprodukte PRIPOL 1009, 1013, 1022 der Firma Unichema, eingesetzt werden.
Bevorzugt enthalten auch die eingesetzten Kondensationsharze tertiäre Aminogruppen, sofern diese Aminogruppen keinen negative Einfluß auf die Farbzahl der Beschichtungsmittel haben. Bevorzugt werden die Aminogruppen durch Verwendung von N-Methyl-bis-(2-hydroxiethyl)-amin als Aufbaukomponente in das Kondensationsharz eingeführt.

Als Vernetzungsmittel enthalten diese erfindungsgemäßen Beschichtungmittel Epoxidverbindungen mit mindestens 2 Epoxidgruppen pro Molekül. Aufgrund der geringeren Vergilbungsneigung werden insbesondere aliphatische und/oder alicyclische Epoxidharze eingesetzt. Das Vernetzungsmittel wird dabei üblicherweise in einer solchen Menge eingesetzt, daß das Verhältnis der freien Carboxylgruppen des Bindemittels (Acrylatcopolymerisat plus ggf. weiteres carboxylgruppenhaltiges Polykondensationsharz) zu den Epoxidgruppen des Epoxidharzes im Bereich von 1 : 3 bis 3 : 1 liegt. Der Gehalt des Beschichtungsmittels an Bindemittel plus Vernetzungsmittel liegt üblicherweise zwischen 30 und 70 Gew.-%, bezogen auf das Gesamtgewicht des Beschichtungsmittels.

Beispiele für als Vernetzungsmittel geeignete Epoxidharze sind cycloaliphatische Bisepoxide, epoxidierte Polybutadiene, die durch Reaktion von handelsüblichen Polybutadienölen mit Persäuren bzw. organischen Säure-H₂O₂-Mischungen entstehen, Epoxidierungsprodukte natürlich vorkommender Fette, Öle, Fettsäurederivate, modifizierter Öle, epoxidgruppenhaltige Novolake, Glycidylether eines mehrwertigen Alkohols, z.B. Ethylenglykoldiglycidylether, Glycerinpolyglycidylether, Sorbitolpolyglycidylether, Trimethylolpropanpolyglycidylether und Pentaerythritpolyglycidylether sowie geeignete Acrylatharze mit seitenständigen Oxirangruppen. Des weiteren können auch vorteilhaft als Vernetzungsmittel Umsetzungsprodukte von hydroxylgruppenhaltigen Polyepoxiden mit Di- oder Polyisocyanaten eingesetzt werden, wie sie z.B. durch Umsetzung OH-funktioneller Epoxide, wie z.B. von Sorbitolpolyglycidylethern, mit Isophorondiisocyanat entstehen.

Ebenfalls als bevorzugte Vernetzungsmittel eingesetzt werden polare Epoxide, beispielsweise auf der Basis eines Umsetzungsproduktes von Melaminharzen mit Acrylamid unter anschließender Epoxidierung der Acryl-Doppelbindung. Beispielhaft für diese Substanzklasse sei das Handelsprodukt Santolink LSE 114 und Santolink LSE 120 der Firma Monsanto genannt, bei dem das Epoxidharzgrundgerüst ein zweikerniges Melamin ist, das zahlenmittlere Molekulargewicht bei ca. 1200 bis 2000 liegt und das Epoxid-Äquivalentgewicht bei ca. 300 bis 350 liegt.
Für die erfindungsgemäßen Beschichtungsmittel geeignete Lösungsmittel sind beispielsweise Toluol, Methoxypropanol, Xylol, Butanol, Ethylacetat, Butylacetat, Pentylacetat, Glutarsäuredimethylester, Bernsteinsäuredimethylester, 1-Methoxipropylacetat-2, Ethoxiethylpropionat, 2-Ethylhexanol, Ethylenglykoldiacetat, Ethylenglykolmonoethyl- und -butylether oder deren Acetate, Ethylenglykoldimethylether, Diethylenglykoldimethylether, Aromaten enthaltende Benzine, Cyclohexanon, Methylethylketon, Aceton, Acetoxiglykolsäurebutylester, Acetoxiglykolsäureethylester.

Diese Lösungsmittel können einzeln oder auch als Mischung verschiedener Lösungsmittel eingesetzt werden. Der Lösemittelgehalt der Beschichtungsmittel liegt üblicherweise zwischen 70 und 30 Gew.-%, bezogen auf das Gesamtgewicht des Beschichtungsmittels.

Die erfindungsgemäßen Beschichtungsmittel können außerdem noch übliche Hilfs- und Zusatzstoffe in üblichen Mengen, bevorzugt 0,2 bis 10 Gew.-%, bezogen auf das Gesamtgewicht des Beschichtungsmittels enthalten, beispielsweise geringe Mengen eines üblichen Reduktionsmittels sowie Verlaufsmittel, Silikonöle, Weichmacher, wie Phosphorsäureester und Phthalsäureester, viskositätskontrollierende Zusätze, Mattierungsmittel, UV-Absorber und Lichtschutzmittel u.ä. sowie ggf. externe Härtungskatalysatoren, wie z. B. 1,4-Diazabicyclo[2.2.2]octan (DABCO), Diazabicycloalkene, wie z. B. 1,5-Diazabicyclo[4.3.0]non-5-en und 1,8-Diazabicyclo[5.4.0]undec-7-en und andere Amine, sofern sie sich nicht nachteilig auf die Vergilbung der Klarlacke auswirken. Bevorzugt wird als Vernetzungskatalysator 1,4-Diazabicyclo[2.2.2]octan eingesetzt.
Die erfindungsgemäßen Beschichtungsmittel eignen sich insbesondere für den Einsatz als Klarlack, besonders bevorzugt für die Applikation auf Wasserbasislack (Metallic-Wasserbasislack oder pigmentierter Wasserbasislack). Sie können aber auch beispielsweise als pigmentierter Decklack eingesetzt werden.

Sie sind daher bevorzugt füllstoff- und pigmentfrei, können aber auch ggf. übliche Pigmente und Füllstoffe in üblichen Mengen, bevorzugt 0 bis 60 Gew.-%, bezogen auf das Gesamtgewicht des Beschichtungsmittels, enthalten, wie z.B. Talkum, Glimmer, Kaolin, Kreide, Quarzmehl, Asbestmehl, Bariumsulfat, Silikate, Glasfasern, Titandioxid u.ä.

Diese Beschichtungsmittel können durch Spritzen, Fluten, Tauchen, Walzen, Rakeln oder Streichen auf ein Substrat in Form eines Films aufgebracht werden.

Die erfindungsgemäßen Beschichtungsmittel lassen sich auf die verschiedensten Unterlagen aufbringen. Geeignete Substrate sind beispielsweise Metalle, wie Eisen, Zink, Titan, Kupfer, Aluminium, Stahl, Messing, Bronze, Magnesium oder dergleichen, weiter Keramik, Holz, Glas, Beton, Kunststoffe.

Die erfindungsgemäßen Beschichtungsmittel härten bei relativ niedriger Temperatur, d.h. bei Raumtemperatur oder etwas erhöhten Temperaturen. Die niedrige Härtungstemperatur sowie die kurze Härtungszeit sind auf das Vorliegen eines internen Katalysators im Bindemittelsystem zurückzuführen. Sind kurze Härtungszeiten und niedrige Härtungstemperaturen erwünscht, so wird ein Bindemittel mit einer relativ hohen Aminzahl eingesetzt.

Aufgrund der niedrigen Härtungstemperaturen von i.a. 20 bis 80°C eignen sich die erfindungsgemäßen Beschichtungsmittel insbesondere für die Autoreparaturlackierung, sie können aber selbstverständlich auch für die Serienlackierung eingesetzt werden. Die Beschichtungsmittel werden insbesondere als Klarlack, beispielsweise auf einer Metallic-Basislackschicht, eingesetzt. Vorzugsweise werden sie als Klarlack auf einer Wasserbasislackschicht (Metallic-Wasserbasislack oder pigmentierter Wasserbasislack) eingesetzt. Sie können aber auch als pigmentierter Decklack, eingesetzt werden. Denkbar ist auch ein Einsatz als Füller oder Grundiermaterial.

Die Erfindung wird in den folgenden Beispielen näher erläutert. Alle Angaben über Teile und Prozentsätze sind dabei Gewichtsangaben, falls nicht ausdrücklich etwas anderes festgestellt wird.

### 1. Herstellung von erfindungsgemäßen Copolymerisatlösungen

In einem 4l-Edelstahlkessel, ausgerüstet mit Rührer, Rückflußkühler und Zulaufgefäßen wird ein Lösemittelgemisch aus Xylol und Butylacetat vorgelegt und auf 110°C aufgeheizt. Die Gesamtlösemittelmenge wird so festgelegt, daß nach beendeter Polymerisation der nichtflüchtige Anteil bei theoretisch 50% liegt. Das Verhältnis der Lösemittel zueinander beträgt 1:1. Kleinere Mengen an Xylol (1-2%), bez. auf die Gesamtrezeptur können ggfs. zur Reinigung der Zulaufgefäße zurückgehalten werden. Die Monomeren werden innerhalb von 3 Stunden, die Initiatorlösung (20%ige Lösung in Butylacetat) innerhalb von 3,5 Stunden zudosiert.

Bei Einsatz von Dimethylaminopropylmethacrylat ist das amino-funktionelle Monomer vom Regler separat zuzudosieren. Das aminofunktionelle Monomer wird zusammen mit den Acrylsäureestern und der Regler (Mercaptoethanol) zusammen mit den Methacrylsäureestern zudosiert.

Während der Dosierung wird die Temperatur bei konstant 110°c gehalten. Nach Beendigung des Intiatorzulaufes wird noch für mindestens zwei Stunden bei der Polymerisationstemperatur gehalten und stündlich Festkörpergehalt und Viskosität der Lösung gemessen.

Die Copolymerisatlösung wird dann abgekühlt auf 50°C und es wird die berechnete Menge Hexahydrophthalsäureanhydrid zugegeben, um eine Säurezahl von 70 mg/KOH (bez. auf Festanteil) zu erreichen. Dabei wird die Säurezahl des Copolymerisates nach der Polymerisation berücksichtigt. Die Addition des Anhydrides verläuft stark exotherm. Nach Abklingen der exothermen Reaktion hält man noch eine weitere Stunde bei 50°C und kontrolliert dann über die Säurezahl den Reaktionsfortschritt durch Vergleich der Werte nach Zugabe von Alkohol und nach Zugabe von Wasser zur Probe und anschließender Titration mit wässriger, bzw. alkoholischer 0,5 molarer KOH. Sind beide Werte nahezu gleich, wird mit sekundär- Butanol auf eine Konzentration von 50% verdünnt.

Die Tabelle 1 gibt die Zusammensetzung der Copolymerisatlösungen wider. Die Copolymerisatlösungen E1 und E2 stellen erfindungsgemäße Beispiele, die Copolymerisatlösungen V1 bis V3 Vergleichsbeispiele dar.

In der Tabelle 1 ist SZ = Säurezahl in mg KOH/g, bezogen auf Festharz. Der Meßwert (1) wurde bestimmt nach der Polymerisationsstufe. Der Meßwert (2) wurde bestimmt nach der polymeranalogen Umsetzung. Die Viskosität wurde auf einem Platte/Kegel-Viskosimeter bei 23°C in dPa·s gemessen.

### 2. Herstellung von carboxylgruppenhaltigen Polykondensationsharzen

### 2.1. Carboxylgruppenhaltiges Polykondensat 1:

In einem 4-l-Edelstahlkessel, ausgerüstet mit Rührer, wasserdampfbeheizter Trennkolonne, Wasserabscheider und Rückflußkühler werden eingewogen:

| | | |
|---|---|---|
| 1014,1 | Teile | Hexahydropthalsäureanhydrid |
| 1245,7 | Teile | Cyclohexandicarbonsäure (90%ig) |
| 359,1 | Teile | Methyldiethanolamin |
| 1507,1 | Teile | Trimethylolpropan |
| 433,5 | Teile | Isononansäure (3,3,5 Trimethylhexansäure) |
| 167,2 | Teile | Benzoesäure |
| 197,0 | Teile | Xylol |
| 4,7 | Teile | Triisodecylphosphit |

Die Mischung wird aufgeschmolzen und innerhalb von 5 Stunden auf 180°C aufgeheizt. Das bei der Reaktion gebildete Wasser wird kontinuierlich ausgekreist, das Schleppmittel Xylol wird in den Kessel zurückgeführt. Die Temperatur wird bei 180°C gehalten, bis eine Säurezahl von 20 mg KOH bei einer Viskosität 5,2 dPa·s (50%ig in Xylol) erreicht wird. Danach wird gekühlt und mit Xylol auf einen Feststoffgehalt von 80% angelöst. Nach Abzug der Proben berechnet sich die für eine Endsäurezahl zuzugebende Menge Hexahydrophtalsäureanhydrid zu 636,5 Teilen. Zusätzlich werden 0,05% (bez. auf Festharz) Triisodecylphosphit zugegeben. Durch Verdünnen mit Xylol wird die Addition dann bei einem Feststoffgehalt von 70% durchgeführt. Die Temperatur wird während der Addition bei 60-80°C gehalten. Der Reaktionsfortschritt wird durch Bestimmung der wässrigen und alkoholischen Säurezahl verfolgt. Sind beide Säurezahlen annähernd gleich, wird mit Xylol auf 65% und anschließend mit sekundär-Butanol auf einen Feststoffgehalt von 60% angelöst. Das Polykondensat weist dann eine Viskosität von 5,7 dPa·s (50%ig in Xylol, Platte/Kegel 23°C) und eine Säurezahl von 69-71 mg KOH/g auf.

### 2.2. Carboxylgruppenhaltiges Polykondensat 2:

Nach dem gleichen Verfahren wie bei der Herstellung von Polykondensat 1 wird aus folgenden Rohstoffen Polykondensat 2 hergestellt:

| | | |
|---|---|---|
| 488,0 | Teile | Hexahydropthalsäureanhydrid |
| 515,0 | Teile | Cyclohexandicarbonsäure (90%ig) |
| 82,8 | Teile | Methyldiethanolamin |
| 752,0 | Teile | Trimethylolpropan |
| 200,0 | Teile | Isononansäure (3,3,5 Trimethylhexansäure) |
| 77,0 | Teile | Benzoesäure |
| 72,5 | Teile | Neopentylglykol |
| 88,0 | Teile | Xylol |
| 1,14 | Teile | Triisodecylphosphit |

Nach Erreichen einer Säurezahl von 18 mg KOH/g wird abgekühlt und es werden 321,1 Teile Hexahydrophthalsäure, 886 Teile Xylol und 1,12 Teile Triisodecylphophit zugegeben. Die Additionsreaktion wird bei 50 - 60°C durchgeführt, bis eine Säurezahl von 68,3/69,2 (wässrig/alkoholisch) erreicht ist. Anschließend wird mit Xylol auf einen Feststoffgehalt von 65% und mit sekundär-Butanol auf 60% angelöst. Die so erhaltene Polykondensatlösung weist eine Viskosität von 13,5 dPa·s auf (Platte/Kegel 23°C).

### 3. Herstellung und Applikation von Klarlacken

Aus den in Tabelle 2 angegebenen Komponenten werden durch Vermischen die Klarlacklösungen EL1 und EL2 (erfindungsgemäße Beispiele) und VL1 bis VL3 (Vergleichsbeispiele) hergestellt.

Die Klarlacklösungen werden mit der Lackverdünnung auf eine Viskosität, gemessen im DIN 4-Auslaufbecher bei 20°C, von 21 Sekunden eingestellt. Die Lacklösungen werden dann mit der angegebenen Menge Härterlösung und DABCO-Lösung vermischt. Zur Bestimmung der Pendelhärte werden von den Lacken Glasaufgüsse hergestellt. Die Lackfilme werden für 30 Minuten bei 60°C oder 20 Minuten bei 80°C eingebrannt, anschließend noch 2 Stunden bei Raumtemperatur (23°C) belassen und danach die Pendelhärte gemessen. Bei einer Schichtdicke von 20 µm (trocken) wird dann die Pendelhärte des Filmes bestimmt. Für die anderen Prüfvorgänge wird der Lack auf phosphatierte und beschichtete Stahlbleche appliziert. Die phosphatierten Stahlbleche werden hierzu mit einem handelsüblichen 2-Komponenten Polyurethan-Füller (OH-Komponenten = polyestermodifiziertes hydroxylgruppenhaltiges Acrylat mit einer OH-Zahl von 140 - 160 mg KOH/g; Isocyanat-Komponente = über Isocyanuratstruktur trimerisiertes Hexamethylendiisocyanat) beschichtet, über Nacht getrocknet und anschließend mit einem handelsüblichen konventionellen Metallic-Basis-Lack (physikalisch getrocknet, basierend auf Polyesterharz, Melaminharz, Celluloseacetobutyrat, Aluminium-flakes) beschichtet. Nach einer Ablüftzeit von 30 min wird der Klarlack appliziert. Die Tafeln werden sofort den beschriebenen Prüfungen unterzogen. Die Ergebnisse sind in der Tabelle 3 zusammengestellt.

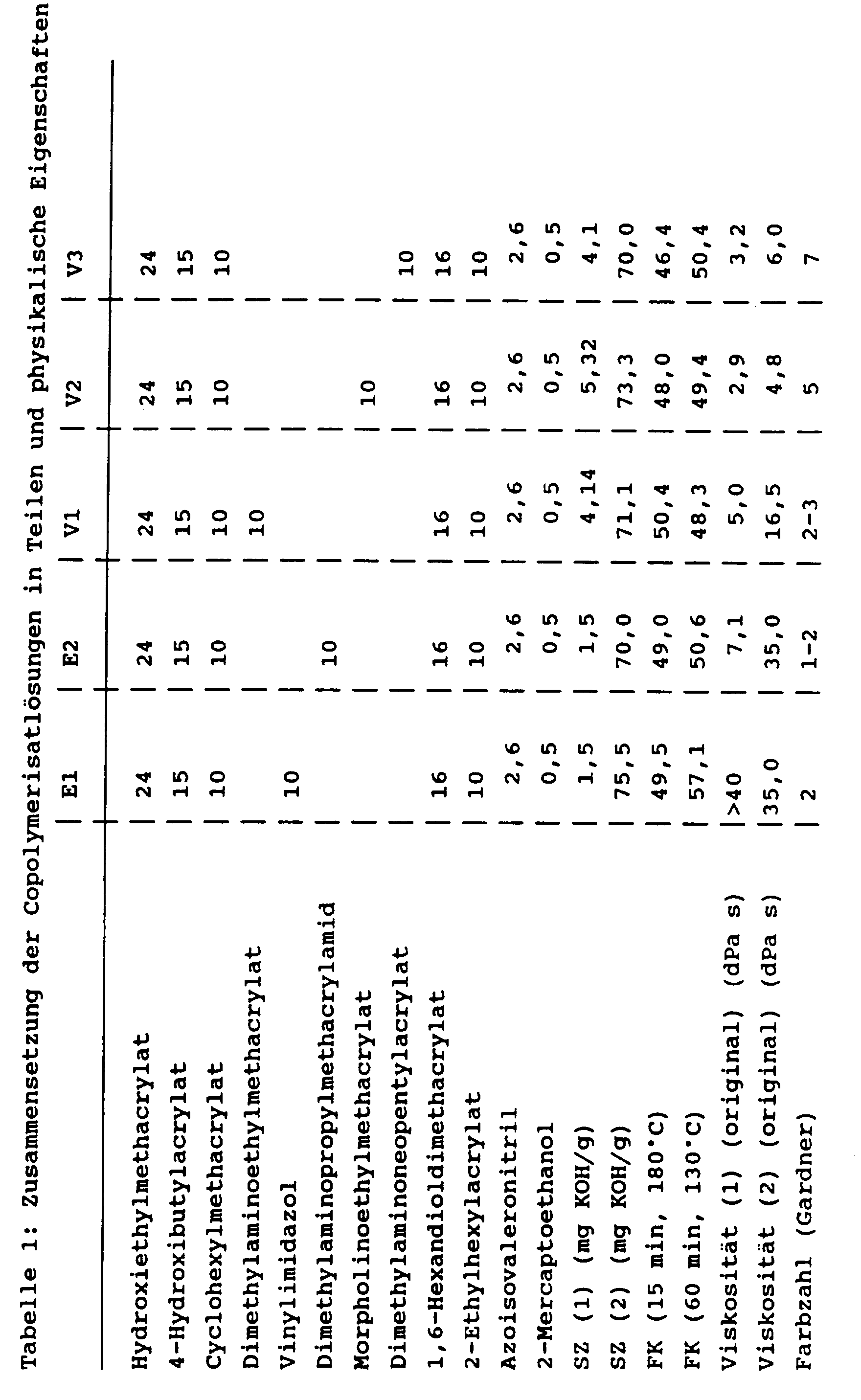

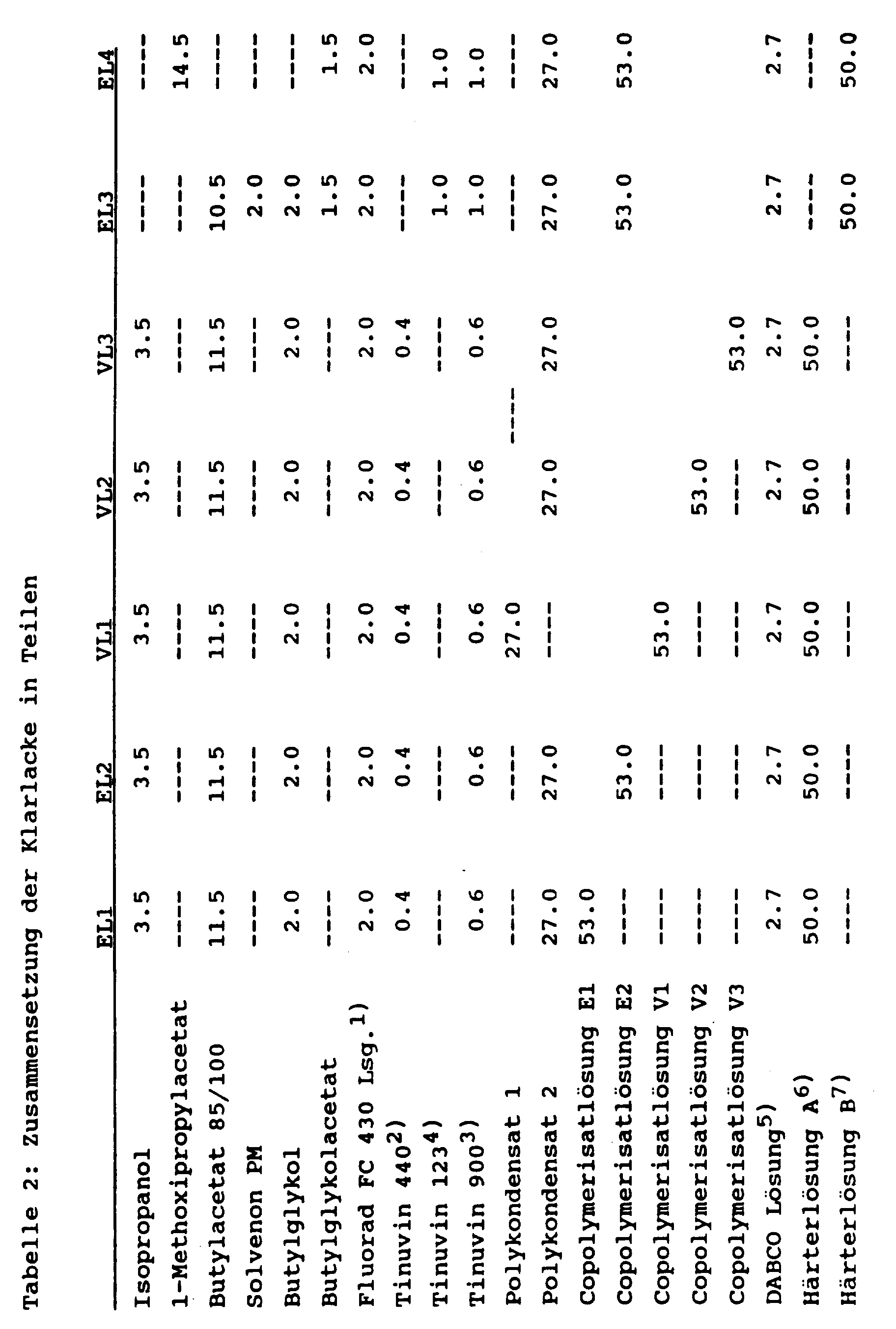

Erläuterungen zu Tabelle 2:
¹⁾ Lösung von 5 Teilen des handelsüblichen Verlaufsmittels Fluorad FC 430 der Firma 3M in 95 Teilen Xylol
²⁾ handelsübliches Lichtschutzmittel auf Basis eines sterisch gehinderten Amins
³⁾ handelsübliches Lichtschutzmittel auf Basis Benztriazol
⁴⁾ handelsübliches Lichtschutzmittel auf Basis eines sterisch gehinderten Amins
⁵⁾ DABCO Lösung:

| | |
|---|---|
| Diazobicyclooctan | 5.5 Teile |
| Butylglylolacetat | 9.5 Teile |
| 1-Methocipropylacetat | 42.5 Teile |
| Butylacetat 98 | 42.5 Teile |

⁶⁾ Härterlösung A: Lösung von 63,8 Teilen eines handelsüblichen Epoxidharzes auf Basis eines zweikernigen Melaminharzes mit einem zahlenmittleren Molekulargewicht von 1200 bis 2000 und einem Epoxidäquivalentgewicht von 300 bis 350 (Handelsprodukt Santolink LSE 114 der Firma Monsanto) in 36,2 Teilen Methoxipropanol
⁷⁾ Härterlösung B: Lösung von 100 Teilen einer 60 %igen Lösung eines handelsüblichen Epoxidharzes auf Basis eines zweikernigen Melaminharzes mit einem zahlenmittleren Molekulargewicht von 1200 bis 2000 und einem Epoxidäquivalentgewicht von 300 bis 350 (Handelsprodukt Santolink LSE 114 der Firma Monsanto) in Methoxipropanol-2 und 33,3 Teilen Butylacetat 98/100 (Festkörpergehalt 45 %)

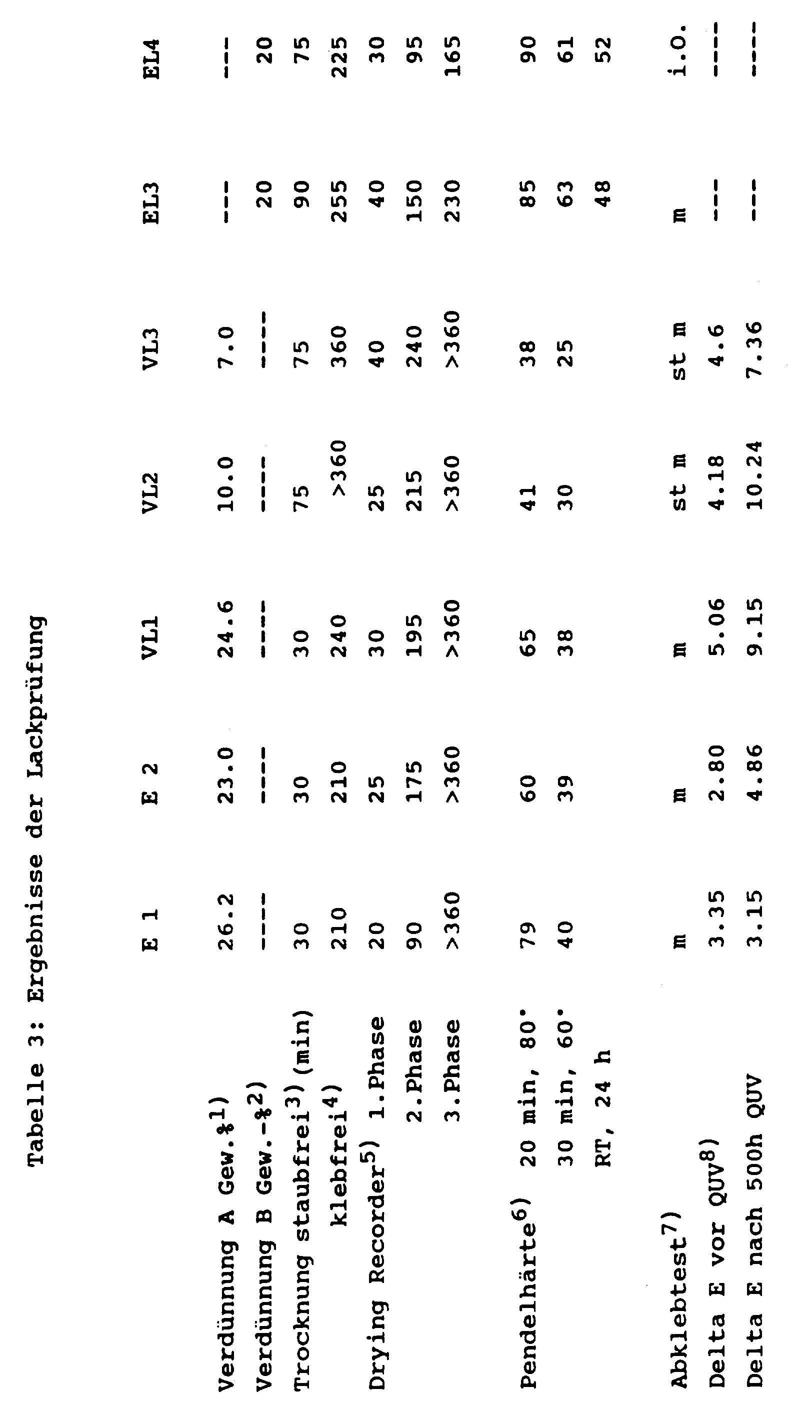

Erläuterungen zu Tabelle 3 :
¹⁾ Lackverdünnung A:

| | |
|---|---|
| Methoxipropanol | 50 |
| 1-Methoxipropylacetat-2 | 25 |
| n-Butanol | 25 |

²⁾ Lackverdünnung B:

| | |
|---|---|
| Butylglykolacetat | 10 |
| 1-Methoxipropylacetat-2 | 45 |
| Butylacetat | 45 |

³⁾ Staubfreiheit: Ca. 15 Minuten nach dem Aufspritzen des Lackes wird die Tafel an einer Ecke mit einer kleinen Probe Seesand (3 - 4 g) bestreut. Die Tafel wird dann aus einer Höhe von 30 cm mit der Kante aufgestoßen (freier Fall). Staubfreiheit ist erreicht, wenn keine Sandanhaftung vorliegt. Die Prüfung wird nach jeweils 15 Minuten wiederholt, kurz vor Erreichen der Staubfreiheit wird das Wiederholungsintervall auf 5 Minuten verkürzt.
⁴⁾ Klebfreiheit:
Ca. 20 Minuten nach Erreichen der Staubfreiheit wird die lackierte Tafel mit einem ca. 3cm Blättchen Papier belegt. Auf dieses Papier wird eine kleine Platte aus Hartkunstoff gelegt, auf das dann ein Gewicht von 100g aufgelegt wird. Nach genau 1 Minute wird wie beim Test auf Staubfreiheit geprüft, ob das Papier noch anhaftet. Zeitintervall wie bei der Prüfung auf Staubfreiheit.
⁵⁾ Drying recorder: Die Prüfung erfolgt mit einem Gerät des Typs B.K. Drying Recorder Hersteller: The Mickle Laboratory Engineering Co.Ltd.,Gomshall,GB nach der folgenden Vorschrift. Vor der Lackierung der Stahlble che mit dem Basislack werden 25 mm breite und 30 cm lange Glasstreifen in Längsrichtung auf die jeweilige Prüftafel geklebt. Die Prüftafeln mitsamt Glasstreifen werden dann mit dem Basislack und nach einer Ablüftzeit von 30 Minuten mit dem Klarlack beschichtet. Die Glasstreifen werden entfernt und in einer speziellen Prüfvorrichtung (Drying recorder) eingespannt. Mit Hilfe des Drying recorders wird nun eine Nadel mit einem Durchmesser von 1 mm innerhalb von 6 Stunden über den Lack gezogen. Dabei erscheinen, bedingt durch die Trocknung des Lackes, drei unterschiedliche Kratzspuren, Phasen genannt. In der ersten Phase dringt die Nadel bis zum Glas durch, der Lack fließt noch zusammen. In der zweiten Phase ist eine deutliche Kratzspur zu erkennen, der Lack fließt nicht mehr zusammen. In der dritten Phase dringt die Nadel nur sehr leicht in die Lackoberfläche ein und hinterläßt nur eine kaum sichtbare Spur. Als Phasenwechsel wird die Mitte des Übergangs zwischen zwei eindeutig definierbaren Phasen angegeben.
⁶⁾ Pendelhärte nach König in Ausschlägen (Faktor 1,4 = Sekunden)
Die Abprüfungen erfolgten jeweils bei einer Umgebungstemperatur von 20 - 23°C.
⁷⁾ Abklebtest
Nach 24h Lagerung der Tafeln bei Raumtemperatur wird ein Streifen Tesakrepp 4330 locker auf die Testtafel aufgeklebt und anschließend durch zweimaliges Überrollen mit einem Metallzylinder ( ca.7 cm lang, ca. 6 cm breit, Gewicht ca. 1.5 kg) angedrückt. Nach 1 Stunde wird das Band entfernt und nach Stärke der Markierung beurteilt.
Beurteilung:

| | |
|---|---|
| in Ordnung: | i.O., |
| leicht markiert: | l.m., |
| markiert: | m, |
| stark markiert: | st.m. |

⁸⁾ QUV-Test:
Für den QUV-Test werden die Klarlacke auf phosphatierte Stahlbleche appliziert. Die phosphatierten Stahlbleche werden hierzu mit einem handelsüblichen 2-Komponenten Polyurethan-Füller beschichtet, über Nacht getrocknet und mit einem konventionellen reinweißen 2-Komponenten Polyurethan-Decklack beschichtet. Nach einer Alterung von 2 - 3 Tagen werden die Tafeln angeschliffen und mit dem zu prüfenden Klarlack mit einer Schichtdicke von ca. 50 µm beschichtet. Nach einer Alterungsphase von 7 Tagen wird der relative Farbton der so beschichteten Tafeln mittels Farbcomputer gegen eine ungeschliffene unbelastete weiße Tafel bestimmt. Die Prüfbleche werden dann in einem QUV-Testgerät (QUV-accelerated-weathering-tester der Firma Q-Panel Company, Cleveland, Ohio, USA) in einem 12-Stunden-Zyklus mit UV-Licht (Lichtquelle FS-40 fluorescence sun lamps UVB 313) für 8 Stunden bei einer Oberflächentemperatur von 70°C und anschließend für 4 Stunden einer Feuchtigkeitsbelastung von 100% relativer Luftfeuchtigkeit bei 50°C ausgesetzt. Nach jeweils 100 Stunden Lichtbelastung wird die Farbtonverschiebung gegen die weiße unbelastete Tafel gemessen. Die Angabe erfolgt in Delta E nach DIN 6174 (CIELAB-System).
Farbtonverschiebungen von Delta E = 3 sind mit dem ungeübten Auge zu erkennen und werden i. d. Regel bei konventionellen Klarlacken auf Basis von OH-Acrylaten, die mit einem trimerisierten Hexamethylendiisocyanat vernetzt werden, nach 500 Stunden Belastung erreicht. Wie aus Tabelle 1 und 3 hervorgeht, zeigen die erfindungsgemäßen Beispiele gegenüber den Vergleichsbeispielen sowohl eine geringere Anfangsfarbzahl (Farbzahlen nach Gardner, Delta E-Werte) als auch nach 500 Stunden QUV-Belastung eine geringere Vergilbung.

## Patentansprüche

1. Aminogruppen, Carboxylgruppen und ggf. Hydroxylgruppen enthaltendes Acrylatcopolymerisat, das erhältlich ist durch Copolymerisation in einem organischen Lösemittel bei Temperaturen zwischen 80 und 150°C unter Verwendung von Polymerisationsinitiatoren und unter Verwendung mindestens eines ethylenisch ungesättigten Monomeren mit einer tertiären Aminogruppe, dadurch gekennzeichnet, daß das Acrylatcopolymerisat hergestellt worden ist, indem
A) mittels radikalischer Lösungspolymerisation unter Verwendung von Azoinitiatoren bei Temperaturen von 80 bis 150°C aus
a₁) 1 bis 20 Gew.-% Vinylimidazol und/oder Dimethylaminopropylmethacrylamid,
a₂) 0 bis 50 Gew.-% eines oder mehrerer hydroxylgruppenhaltiger Monomerer,
a₃) 0 bis 50 Gew.-% eines oder mehrerer carboxylgruppenhaltiger Monomerer und
a₄) 30 bis 85 Gew.-% mindestens eines weiteren ethylenisch ungesättigten, copolymerisierbaren Monomers,
wobei die Summe der Gewichtsanteile der Komponenten a₁ bis a₄ jeweils 100 Gew.-% beträgt und wobei die Gewichtsanteile der Komponenten a₂ und a₃ nicht beide gleichzeitig Null sind, ein aminogruppen- und ggf. carboxylgruppenhaltiges Acrylatcopolymerisat hergestellt worden ist und
B) ggf. das in der Stufe (A) erhaltene Acrylatcopolymerisat mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

2. Acrylatcopolymerisat nach Anspruch 1, dadurch gekennzeichnet, daß es hergestellt worden ist, indem in der Stufe A ein aminogruppen- und carboxylgruppen- und ggf. hydroxylgruppenhaltiges Acrylatcopolymerisat aus
a₁) 5 bis 15 Gew.-% Vinylimidazol und/oder Dimethylaminopropylmethacrylamid,
a₂) 0 bis 20 Gew.-% eines oder mehrerer hydroxylgruppenhaltiger Monomerer,
a₃) 20 bis 50 Gew.-% eines oder mehrerer carboxylgruppenhaltiger Monomerer und
a₄) 40 bis 60 Gew.-% mindestens eines weiteren ethylenisch ungesättigten, copolymerisietbaren Monomers,
hergestellt worden ist, wobei die Summe der Gewichtsanteile der Komponenten a₁ bis a₄ jeweils 100 Gew.-% beträgt und dieses in der Stufe (A) erhaltene Acrylatcopolymerisat ggf. mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

3. Acrylatcopolymerisat nach Anspruch 1, dadurch gekennzeichnet, daß es hergestellt worden ist, indem
A) aus
a₁) 5 bis 15 Gew.-% Vinylimidazol und/oder Dimethylaminopropylmethacrylamid,
a₂) 20 bis 40 Gew.-% eines oder mehrerer hydroxylgruppenhaltiger Monomerer,
a₃) 0 bis 10 Gew.-% eines oder mehrerer carboxylgruppenhaltiger Monomerer und
a4) 40 bis 60 Gew.-% mindestens eines weiteren ethylenisch ungesättigten, copolymerisierbaren Monomers,
wobei die Summe der Gewichtsanteile der Komponenten a₁ bis a₄ jeweils 100 Gew.-% beträgt, ein amino- , hydroxyl- und ggf. carboxylgruppenhaltiges Acrylatcopolymerisat hergestellt worden ist und
B) das in Stufe (A) erhaltene Acrylatcopolymerisat mit Carbonsäureanhydriden umgesetzt worden ist, wobei die Menge an eingesetzten Carbonsäureanhydriden so gewählt wurde, daß das entstehende Copolymerisat die gewünschte Säurezahl aufweist.

4. Acrylatcopolymerisat nach einem der Ansprüche 1 bis 3, dadurch gekennzeichnet, daß das Acrylatcopolymerisat eine Säurezahl von 20 bis 150 mg KOH/g und eine Aminzahl von 5 bis 60 mg KOH/g aufweist.

5. Acrylatcopolymerisat nach einem der Ansprüche 1 bis 3, dadurch gekennzeichnet, daß das Acrylatcopolymerisat eine Säurezahl von 30 bis 90 mg KOH/g und eine Aminzahl von 10 bis 40 mg KOH/g aufweist.

6. Acrylatcopolymerisat nach einem der Ansprüche 1 bis 5, dadurch gekennzeichnet, daß das in der Stufe A erhaltene Acrylatcopolymerisat bei Temperaturen von ≤ 60°C mit Hexahydrophthalsäureanhydrid und/oder Derivaten des Hexahydrophthalsäureanhydrids umgesetzt worden ist.

7. Acrylatcopolymerisat nach einem der Ansprüche 1 bis 6, dadurch gekennzeichnet, daß als Polymerisationsinitiator Azobisisovaleronitril eingesetzt worden ist.

8. Verfahren zur Herstellung des Carboxylgruppen und Aminogruppen enthaltenden Acrylatcopolymerisates nach einem der Ansprüche 1 bis 7, dadurch gekennzeichnet, daß zu seiner Herstellung die Monomeren in einem organischen Lösemittel bei Temperaturen von 80 bis 150°C unter Verwendung von Azoinitiatoren copolymerisiert werden und das erhaltene Copolymerisat ggf. in einer weiteren Stufe mit Carbonsäureanhydriden umgesetzt wird.

9. Beschichtungsmittel, dadurch gekennzeichnet, daß es als Bindemittel das Carboxylgruppen und Aminogruppen enthaltende Acrylatcopolymerisat nach einem der Ansprüche 1 bis 7 enthält.

10. Beschichtungsmittel nach Anspruch 9, dadurch gekennzeichnet, daß es als Härter Epoxidverbindungen mit mindestens 2 Epoxidgruppen pro Molekül enthält.

11. Beschichtungsmittel nach Anspruch 10, dadurch gekennzeichnet, daß es als Härter aliphatische und/oder alicyclische Epoxidharze enthält.

12. Beschichtungsmittel nach einem der Ansprüche 9 bis 11, dadurch gekennzeichnet, daß es einen zusätzlichen externen Vernetzungskatalysator enthält.

13. Beschichtungsmittel nach einem der Ansprüche 9 bis 12, dadurch gekennzeichnet, daß es als zusätzliches Bindemittel ein carboxylgruppenhaltiges Kondensationsharz enthält.

14. Beschichtungsmittel nach Anspruch 13, dadurch gekennzeichnet, daß das Kondensationsharz eine Säurezahl von 10 bis 160 mg KOH/g und eine Aminzahl von 10 bis 60 mg KOH/g aufweist.

15. Verwendung des Carboxylgruppen und Aminogruppen enthaltenden Acrylatcopolymerisates nach einem der Ansprüche 1 bis 7 als Bindemittel in Beschichtungsmitteln für die Autoreparaturlackierung.

16. Verwendung des Carboxylgruppen und Aminogruppen enthaltenden Acrylatcopolymerisates nach einem der Ansprüche 1 bis 7 als Bindemittel in Klarlacken oder pigmentierten Decklacken.

17. Verwendung der Beschichtungsmittel nach einem der Ansprüche 9 bis 14 als Klarlack über einem Wasserbasislack.

## Claims

1. Acrylate copolymer which contains amino groups, carboxyl groups and, if appropriate, hydroxyl groups and is obtainable by copolymerization in an organic solvent at temperatures between 80 and 150°C, using polymerization initiators and using at least one ethylenically unsaturated monomer having a tertiary amino group, characterized in that the acrylate copolymer has been produced by preparing an acrylate copolymer containing amino groups and, if appropriate, carboxyl groups by means of
A) free-radical solution polymerization, using azo initiators at temperatures from 80 to 150°C, of
a₁) 1 to 20% by weight of vinylimidazole and/or dimethylaminopropylmethacrylamide,
a₂) 0 to 50% by weight of one or more monomers containing hydroxyl groups,
a₃) 0 to 50% by weight of one or more monomers containing carboxyl groups, and
a₄) 30 to 85% by weight of at least one further ethylenically unsaturated copolymerizable monomer,
the total of the proportions by weight of the components a₁ to a₄ always being 100% by weight, and the proportions by weight of the components a₂ and a₃ not both simultaneously being zero, and
B) if appropriate, reacting the acrylate copolymer obtained in stage (A) with carboxylic acid anhydrides, the quantity of carboxylic acid anhydrides employed having been selected such that the resulting copolymer has the desired acid number.

2. Acrylate copolymer according to Claim 1, characterized in that it has been produced by preparing in stage A an acrylate copolymer containing amino groups and carboxyl groups and, if appropriate, hydroxyl groups from
a₁) 5 to 15% by weight of vinylimidazole and/or dimethylaminopropylmethacrylamide,
a₂) 0 to 20% by weight of one or more monomers containing hydroxyl groups,
a₃) 20 to 50% by weight of one or more monomers containing carboxyl groups, and
a₄) 40 to 60% by weight of at least one further ethylenically unsaturated copolymerizable monomer,
the total of the proportions by weight of the components a₁ to a₄ always being 100% by weight, and, if appropriate, reacting this acrylate copolymer obtained in stage (A) with carboxylic acid anhydrides, the quantity of carboxylic acid anhydrides employed having been selected such that the resulting copolymer has the desired acid number.

3. Acrylate copolymer according to Claim 1, characterized in that it has been produced by preparing an acrylate copolymer containing amino groups, hydroxyl groups and, if appropriate, carboxyl groups
A) from
a₁) 5 to 15% by weight of vinylimidazole and/or dimethylaminopropylmethacrylamide,
a₂) 20 to 40% by weight of one or more monomers containing hydroxyl groups,
a₃) 0 to 10% by weight of one or more monomers containing carboxyl groups, and
a₄) 40 to 60% by weight of at least one further ethylenically unsaturated copolymerizable monomer,
the total of the proportions by weight of the components a₁ to a₄ always being 100% by weight, and
B) reacting the acrylate copolymer obtained in stage (A) with carboxylic acid anhydrides, the quantity of carboxylic acid anhydrides employed having been selected such that the resulting copolymer has the desired acid number.

4. Acrylate copolymer according to one of Claims 1 to 3, characterized in that the acrylate copolymer has an acid number from 20 to 150 mg of KOH/g and an amine number from 5 to 60 mg of KOH/g.

5. Acrylate copolymer according to one of Claims 1 to 3, characterized in that the acrylate copolymer has an acid number from 30 to 90 mg of KOH/g and an amine number from 10 to 40 mg of KOH/g.

6. Acrylate copolymer according to one of Claims 1 to 5, characterized in that the acrylate copolymer obtained in stage A has been reacted at temperatures of ≤ 60°C with hexahydrophthalic anhydride and/or derivatives of hexahydrophthalic anhydride.

7. Acrylate copolymer according to one of Claims 1 to 6, characterized in that azobisisovaleronitrile has been used as the polymerization initiator.

8. Process for the production of the acrylate copolymer, containing carboxyl groups and amino groups, according to one of Claims 1 to 7, characterized in that, for the production thereof, the monomers are copolymerized, using azo initiators, in an organic solvent at temperatures from 80 to 150°C and the resulting copolymer is, if appropriate, reacted with carboxylic acid anhydrides in a further stage.

9. Coating agent, characterized in that it contains, as binder, the acrylate copolymer, containing carboxyl groups and amino groups, according to one of Claims 1 to 7.

10. Coating agent according to Claim 9, characterized in that it contains, as curing agent, epoxide compounds having at least 2 epoxide groups per molecule.

11. Coating agent according to Claim 10, characterized in that it contains, as curing agent, aliphatic and/or alicyclic epoxide resins.

12. Coating agent according to one of Claims 9 to 11, characterized in that it contains an additional extraneous crosslinking catalyst.

13. Coating agent according to one of Claims 9 to 12, characterized in that it contains, as additional binder, a condensation resin which contains carboxyl groups.

14. Coating agent according to Claim 13, characterized in that the condensation resin has an acid number of 10 to 160 mg of KOH/g and an amine number of 10 to 60 mg of KOH/g.

15. Use of the acrylate copolymer, containing carboxyl groups and amino groups, according to one of Claims 1 to 7 as binder in coating agents for automotive refinishing.

16. Use of the acrylate copolymer, containing carboxyl groups and amino groups, according to one of Claims 1 to 7 as binder in clearcoats or pigmented topcoats.

17. Use of the coating agent according to one of Claims 9 to 14 as clearcoat above a water-based paint.

## Revendications

1. Polymérisat d'acrylate renfermant des groupes amino, des groupes carboxyle et contenant éventuellement des groupes hydroxyle, que l'on peut obtenir par copolymérisation dans un solvant organique à des températures entre 80 et 150°C par utilisation d'agents initiateurs de polymérisation et par utilisation d'au moins un monomère éthyléniquement insaturé avec un groupe amino tertiaire, caractérisé en ce que le copolymérisat d'acrylate a été fabriqué
A) en fabriquant grâce à une polymérisation radicalaire en solution par utilisation d'agents initiateurs azoïques à des températures de 80 à 150°C obtenus à partir
a₁) de 1 à 20 % en poids de vinylimidazole et/ou de diméthylaminopropylméthacrylamide,
a₂) de 0 à 50 % en poids d'un ou de plusieurs monomères renfermant des groupes hydroxyle,
a₃) de 0 à 50 % en poids d'un ou de plusieurs monomères renfermant des groupes carboxyle, et
a₄) de 30 à 85 % en poids d'au moins un monomère copolymérisable, éthyléniquement insaturé supplémentaire,
la somme des proportions en poids des composants a₁ à a₄ étant à chaque fois de 100 % en poids, et les proportions en poids de composants a₂ et a₃ n'étant pas simultanément nulles, un copolymérisat d'acrylate renfermant des groupes amino et, le cas échéant, renfermant des groupes carboxyle et
B) le cas échéant, en faisant réagir le copolymérisat d'acrylate obtenu dans l'étape (A) avec des anhydrides d'acide carboxylique, la quantité d'anhydrides d'acide carboxylique ayant été choisie de sorte que le copolymérisat qui se forme présente l'indice d'acidité souhaité.

2. Copolymérisat d'acrylate selon la revendication 1, caractérisé en ce qu'il a été fabriqué en fabricant, dans l'étape A, un copolymérisat d'acrylate renfermant des groupes amino, et renfermant des groupes carboxyle, et, le cas échéant, renfermant des groupes hydroxyle à partir de
a1) de 5 à 15 % en poids de vinylimidazole et/ou de diméthylaminopropylméthacrylamide,
a₂) de 0 à 20 % en poids d'un ou de plusieurs monomères renfermant des groupes hydroxyle,
a₃) de 20 à 50 % en poids d'un ou de plusieurs monomères renfermant des groupes carboxyle, et
a₄) de 40 à 60 % en poids d'au moins un monomère copolymérisable, éthyléniquement insaturé supplémentaire,
la somme des proportions en poids des composants a₁ à a₄ étant à chaque fois de 100 % en poids et en ce que l'on a fait réagir le copolymérisat d'acrylate obtenu dans l'étape (A) le cas échéant avec des anhydrides d'acide carboxylique, la quantité d'anhydrides d'acide carboxylique ayant été choisie de sorte que le copolymérisat qui se forme présente l'indice d'acidité souhaité.

3. Copolymérisat d'acrylate selon la revendication 1, caractérisé en ce qu'il a été fabriqué en fabricant,
A) à partir
a₁) de 5 à 15 % en poids de vinylimidazole et/ou de diméthylaminopropylméthacrylamide,
a₂) de 20 à 40 % en poids d'un ou de plusieurs monomères renfermant des groupes hydroxyle,
a₃) de 0 à 10 % en poids d'un ou de plusieurs monomères renfermant des groupes carboxyle, et
a₄) de 40 à 60 % en poids d'au moins un monomère copolymérisable, éthyléniquement insaturé supplémentaire,
la somme des proportions en poids des composants a₁ à a₄ étant à chaque fois de 100 % en poids, un copolymérisat d'acrylate renfermant des groupes amino, renfermant des groupes hydroxyle et, le cas échéant , renfermant des groupes carboxyle et
B) en faisant réagir le copolymérisat d'acrylate obtenu dans l'étape (A) avec des anhydrides d'acide carboxylique, la quantité d'anhydrides d'acide carboxylique ayant été choisie de sorte que le copolymérisat qui se forme présente l'indice d'acidité souhaité.

4. Copolymérisat d'acrylate selon l'une quelconque des revendications 1 à 3, caractérisé en ce que le copolymérisat d'acrylate présente un indice d'acidité de 20 à 150 mg de KOH/g et un indice d'amine de 5 à 60 mg de KOH/g.

5. Copolymérisat d'acrylate selon l'une quelconque des revendications 1 à 3, caractérisé en ce que le copolymérisat d'acrylate présente un indice d'acidité de 30 à 90 mg de KOH/g et un indice d'amine de 10 à 40 mg dé KOH/g.

6. Copolymérisat d'acrylate selon l'une quelconque des revendications 1 à 5, caractérisé en ce que l'on a fait réagir le copolymérisat d'acrylate obtenu dans l'étape (A) à des températures de s 60°C avec l'anhydride de l'acide hexahydrophtalique et/ou des dérivés de l'anhydride de l'acide hexahydrophtalique.

7. Copolymérisat d'acrylate selon l'une quelconque des revendications 1 à 6, caractérisé en ce que l'on a utilisé, en tant qu'agent initiateur de la polymérisation, de l'azobisisovaléronitrile.

8. Procédé de fabrication du copolymérisat d'acrylate renfermant des groupes carboxyle et des groupes amino selon l'une quelconque des revendications 1 à 7, caractérisé en ce qu'en vue de sa fabrication l'on procède à la copolymérisation des monomères dans un solvant organique à des températures de 80 à 150°C par utilisation d'agents initiateurs azoïques et en ce que l'on fait réagir le copolymérisat d'acrylate obtenu, le cas échéant, dans une étape supplémentaire avec des anhydrides d'acide carboxylique.

9. Agent de revêtement, caractérisé en ce qu'il contient, en tant que liant, le copolymérisat d'acrylate obtenu renfermant des groupes carboxyle et amino selon l'une quelconque des revendications 1 à 7.

10. Agent de revêtement selon la revendication 9, caractérisé en ce qu'il contient, en tant qu'agent de durcissement, des composés époxydes ayant au moins 2 groupes époxydes par molécule.

11. Agent de revêtement, selon la revendication 10, caractérisé en ce qu'il contient, en tant qu'agent de durcissement, des résines époxydes aliphatiques et/ou alicycliques.

12. Agent de revêtement selon l'une quelconque des revendications 9 à 11, caractérisé en ce qu'il contient un catalyseur de réticulation externe supplémentaire.

13. Agent de revêtement selon l'une quelconque des revendications 9 à 12, caractérisé en ce qu'il contient, en tant que liant supplémentaire, une résine de condensation renfermant des groupes carboxyle.

14. Agent de revêtement selon la revendication 13, caractérisé en ce que la résine de condensation présente un indice d'acidité de 10 à 160 mg de KOH/g et un indice d'amine de 10 à 60 mg de KOH/g.

15. Utilisation du copolymérisat d'acrylate renfermant des groupes carboxyle et des groupes amino selon l'une quelconque des revendications 1 à 7, en tant que liant, dans des agents de revêtement pour le laquage de réparation automobile.

16. Utilisation du copolymérisat d'acrylate renfermant des groupes carboxyle et des groupes amino selon l'une quelconque des revendications 1 à 7, en tant que liant, dans des laques claires ou des laques de finition pigmentées.

17. Utilisation des agents de revêtement selon l'une quelconque des revendications 9 à 14 en tant que laque claire par-dessus une laque de base à l'eau.
